# EUROPEAN PATENT SPECIFICATION

(11) **EP 4 310 574 B1**
(45) Date of publication and mention of the grant of the patent: **03.12.2025**
(21) Application number: 22771247.8
(22) Date of filing: 09.03.2022
(51) Int. Cl.: G02B 26/10, B81B 3/00, F21S 41/148, F21S 41/16, F21S 41/675, F21V 14/04, G01S 7/481, G02B 26/08, F21W 102/10, F21Y 115/10, F21Y 115/20, F21Y 115/30

(54) **LIGHT REFLECTING DEVICE, SENSOR DEVICE, AND LIGHTING DEVICE**
LICHTREFLEKTIERENDE VORRICHTUNG, SENSORVORRICHTUNG UND BELEUCHTUNGSVORRICHTUNG
DISPOSITIF DE RÉFLEXION DE LUMIÈRE, DISPOSITIF DE CAPTEUR ET DISPOSITIF D'ÉCLAIRAGE

(30) Priority: 17.03.2021 JP 2021043885
(43) Date of publication of application: 24.01.2024
(73) Proprietor: KOITO MANUFACTURING CO., LTD., Minato-ku, Tokyo, 108-8711 (JP)
(72) Inventor: INOUE, Hiroshi, Shizuoka-shi, Shizuoka 424-8764 (JP)
(74) Representative: Cabinet Beau de Loménie
(86) International application number: PCT/JP2022/010342
(87) International publication number: WO 2022/196496

(56) References cited:
- JP-A- 2004 133 196
- JP-A- 2007 293 331
- JP-A- 2008 292 703
- JP-A- 2008 292 703
- JP-A- 2010 026 147
- JP-A- 2010 117 265
- JP-A- 2017 003 414
- JP-A- S61 187 179
- US-A1- 2007 236 675
- US-A1- 2017 038 458
- US-A1- 2019 383 909
- US-A1- 2019 383 909

## Description

### Field

The presently disclosed subject matter relates to a light reflecting device configured to reflect light emitted from a light source in a desired direction. The presently disclosed subject matter also relates to each of a sensor device and a lighting device including the light reflecting device.

### Background

Patent Document 1 discloses a LiDAR system adapted to be installed in a vehicle. The LiDAR system includes a light reflecting device that cyclically changes a traveling direction of light emitted from a light source in order to detect an external object of the vehicle.
JP 2008 292703 A deals with a movable structure, an optical scanning mirror element using the same and a method of manufacturing movable structure.
JP 2004 133196 A deals with a mirror tilting mechanism and an optical switch using the mirror tilting mechanism.

### Citation List

### Patent Document

Patent Document 1: Japanese Patent Publication No. 2020-519891 A

### Summary

### Technical Problem

It is demanded to suppress a decrease in the accuracy of the direction of the light reflection performed by the light reflection device.

### Solution to Problem

A first aspect of the present invention is defined in claim 1, and provides a light reflecting device, comprising:
a light reflective member having a mirror surface adapted to reflect light;
a deflecting mechanism configured to oscillate the light reflective member about an oscillation axis extending in a direction along the mirror surface; and
a first regulating member facing a portion of the light reflective member including the oscillation axis with a gap therebetween in a direction intersecting with the mirror surface, and configured to regulate displacement of the oscillation axis in the direction intersecting with the mirror surface.

A second aspect of the present invention is defined in claim 10, and provides a light reflecting device, comprising:
a light reflective member having a mirror surface adapted to reflect light;
a deflecting mechanism configured to oscillate the light reflective member about an oscillation axis extending in a direction along the mirror surface; and
a pair of regulating members arranged so as to be axially symmetric with respect to the oscillation axis, facing the light reflective member with a gap therebetween in a direction intersecting with the mirror surface, and configured to regulate displacement of the light reflective member in the direction intersecting with the mirror surface.

The inventor has noticed that the direction of the light reflection performed by the light reflecting device may deviate from a prescribed direction with the oscillation of the light reflective member. The inventor has found that, with examination and analysis, there may be a case where the position of the oscillation axis is displaced in a direction intersecting the mirror surface with the oscillation of the light reflective member, and that there is a correlation between the change in the deviation amount from the prescribed direction of the reflecting direction of the light and the displacement of the oscillation axis. As a result, the inventor has conceived that the deviation from the prescribed reflecting direction of the light can be suppressed by regulating the displacement of the oscillation axis caused by the oscillation of the light reflective member.

According to the configuration of each of the above aspects, when the oscillation axis is displaced in a direction intersecting the mirror surface along with the oscillation of the light reflective member, the regulating member abuts upon a portion of the light reflective member. As a result, the displacement of the oscillation axis in the direction intersecting the mirror surface caused by the oscillation of the light reflective member is regulated. Accordingly, it is possible to suppress a decrease in the accuracy of the direction of the light reflection performed by the light reflection device.

An aspect of the present invention is defined in claim 11 and provides a sensor device, comprising:
the light reflecting device according to any one of the above first and second aspects;
a light emitting element configured to emit invisible light; and
a light receiving element configured to output a light detecting signal that corresponds to an incident intensity of invisible light,
wherein the mirror surface of the light reflecting device is arranged to reflect the invisible light emitted from the light emitting element toward a sensing area, and to reflect invisible light reflected by an object situating in the sensing area toward the light receiving element.

According to such a configuration, since the decrease in the accuracy of the light reflecting direction caused by the displacement of the oscillation axis of the light reflection member in the direction intersecting the mirror surface is suppressed, it is possible to suppress also the decrease in the accuracy of the object detection performed by the sensor device utilizing the mirror surface.

An aspect of the present invention is defined in claim 13 and provides a lighting device, comprising:
the light reflecting device according to any one of the above first and second aspects; and
a light source configured to emit visible light,
wherein the mirror surface of the light reflecting device is arranged to reflect the visible light toward a lighting area.

According to such a configuration, since the decrease in the accuracy of the light reflecting direction caused by the displacement of the oscillation axis of the light reflection member in the direction intersecting the mirror surface is suppressed, it is possible to suppress also the decrease in the accuracy of the position and the shape of the light distribution pattern formed by the lighting device utilizing the mirror surface.

### Brief Description of Drawings

FIG. 1 illustrates a partial configuration of a light reflecting device according to an embodiment.
FIG. 2 illustrates a configuration of the light reflecting device of FIG. 1 viewed from a normal direction of a mirror surface thereof.
FIG. 3 illustrates a configuration of the light reflecting device of FIG. 1 viewed from a direction along an oscillation axis thereof.
FIG. 4 is a diagram for mentioning a function of a first regulating member of FIG. 3.
FIG. 5 illustrates an operation of the light reflecting device of FIG. 1.
FIG. 6 illustrates another exemplary configuration of the light reflecting device of FIG. 1.
FIG. 7 illustrates another exemplary configuration of the light reflecting device of FIG. 1.
FIG. 8 illustrates another exemplary configuration of the light reflecting device of FIG. 1.
FIG. 9 illustrates a configuration of the light reflecting device of FIG. 8 viewed from a direction along an oscillation axis thereof.
FIG. 10 illustrates an operation of the light reflecting device of FIG. 8.
FIG. 11 illustrates a configuration of a sensor device in which the light reflecting device of FIG. 1 can be installed.
FIG. 12 illustrates a configuration of a lighting device in which the light reflecting device of FIG. 1 can be installed.
FIG. 13 illustrates a vehicle in which the sensor device and the lighting device can be installed.
FIG. 14 illustrates another exemplary configuration of the light reflecting device of FIG. 1.
FIG. 15 illustrates a case where the sensor device and the lighting device are installed in a traffic infrastructure facility.

### Description of Embodiments

Examples of embodiments will be described below in detail with reference to the accompanying drawings. In each of the drawings used in the following descriptions, the scale is appropriately changed in order to make each member have a recognizable size.

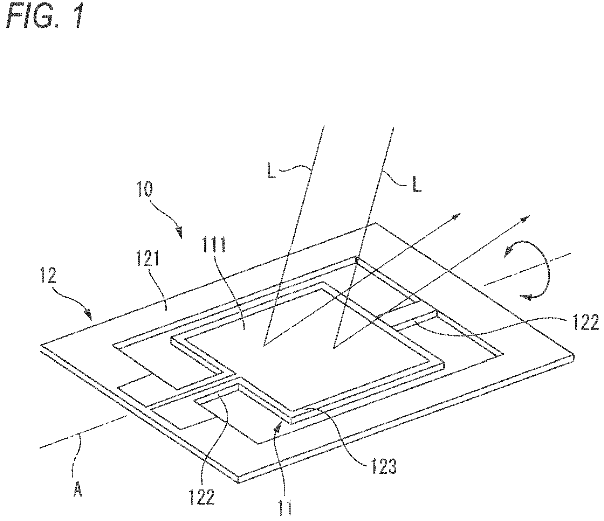

FIGS. 1 to 3 illustrate a configuration of a light reflecting device 10 according to an embodiment. The light reflective device 10 includes a light reflective member 11 and a deflecting mechanism 12.

The light reflective member 11 has a mirror surface 111 for reflecting light L. The deflecting mechanism 12 is configured to oscillate the light reflective member 11 about an oscillation axis A extending in a direction along the mirror surface 111.

The deflecting mechanism 12 includes a frame 121, torsion bars 122, and a coil 123. The light reflective member 11 is supported by the frame 121 via the torsion bars 122. Disposing the coil 123 in a magnetic field generated from a magnet (not illustrated) and causing current to flow in the coil 123, a force for oscillating the light reflective member 11 about the torsion bars 122 is generated. That is, the oscillation axis A extends along the torsion bars 122. As the light reflective member 11 oscillates, a direction that the light L is to be reflected is cyclically changed.

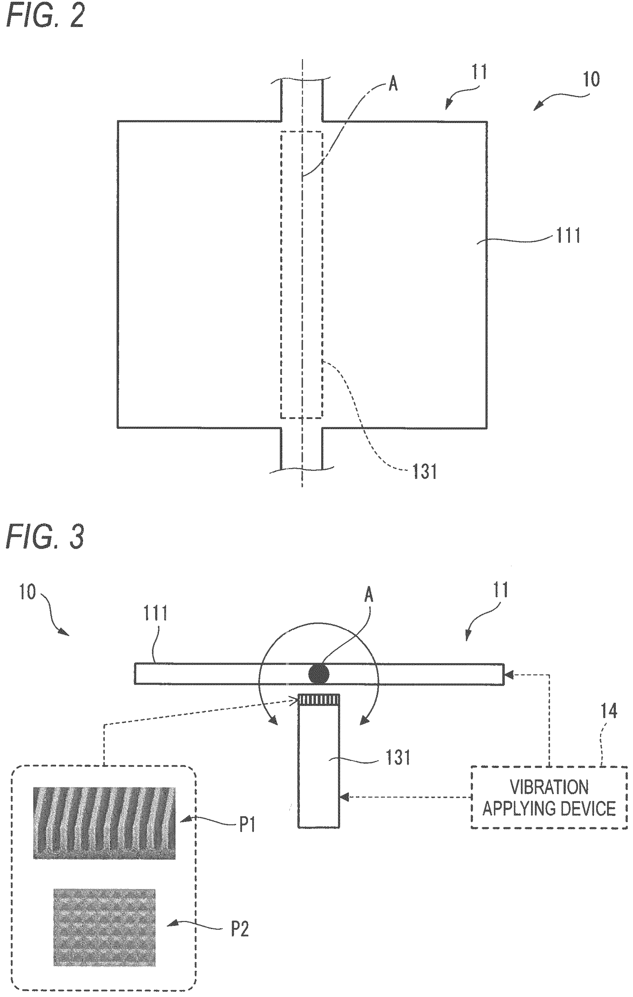

As illustrated in FIGS. 2 and 3, the light reflecting device 10 includes a first regulating member 131. The first regulating member 131 faces a portion of the light reflective member 11 including the oscillation axis A with a gap therebetween in a direction intersecting with the mirror surface 111.

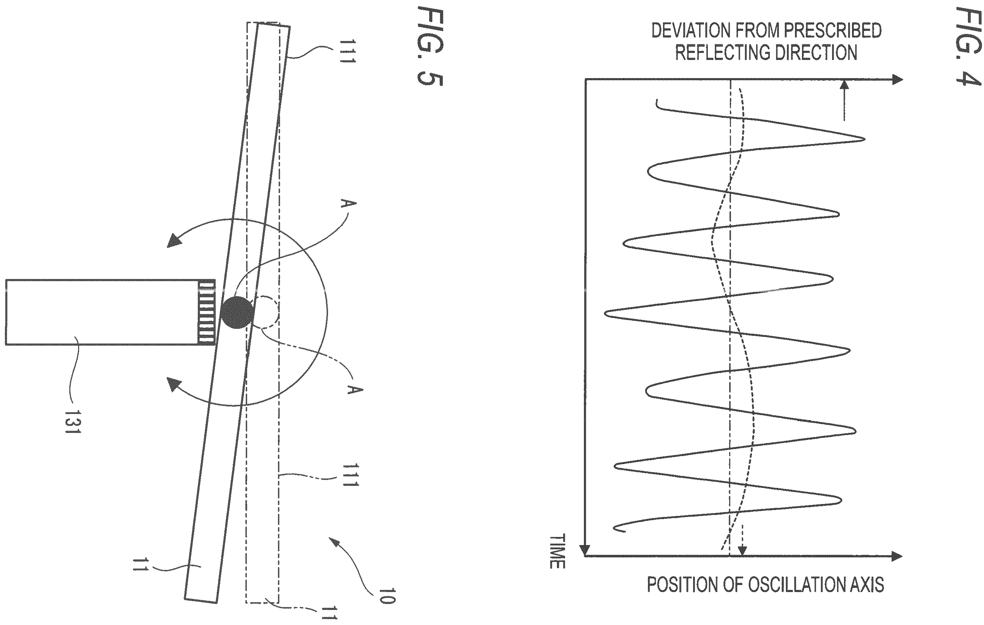

As illustrated in FIG. 4, the inventor has noticed that the reflecting direction of the light L may deviate from a prescribed direction with the oscillation of the light reflective member 11. The inventor has found that, with examination and analysis, there may be a case where the position of the oscillation axis A is displaced in a direction intersecting the mirror surface 111 with the oscillation of the light reflective member 11, and that there is a correlation between the change in the deviation amount from the prescribed direction of the reflecting direction of the light L and the displacement of the oscillation axis A. As a result, the inventor has conceived that the deviation from the prescribed reflecting direction of the light L can be suppressed by regulating the displacement of the oscillation axis A caused by the oscillation of the light reflective member 11.

As illustrated in FIG. 5, according to the configuration of the present embodiment, when the oscillation axis A is displaced in a direction intersecting the mirror surface 111 along with the oscillation of the light reflective member 11, the first regulating member 131 abuts upon a portion of the light reflective member 11. As a result, the displacement of the oscillation axis A in the direction intersecting the mirror surface 111 caused by the oscillation of the light reflective member 11 is regulated. Accordingly, it is possible to suppress a decrease in the accuracy of the direction of the light reflection performed by the light reflection device 10.

On the other hand, in a state that the oscillation axis A is at a prescribed position, since a gap is formed between the light reflective member 11 and the first regulating member 131, the oscillation of the light reflective member 11 is not obstructed by the first regulating member 131. In other words, the size of the gap is determined so that the amount of displacement of the oscillation axis A in the direction intersecting the mirror surface 111 does not exceed an allowable range while allowing a prescribed oscillating action of the light reflective member 11.

In this example, hardness of material forming the first regulating member 131 is so determined as to be lower than hardness of material forming a portion of the light reflective member 11 facing the first regulating member 131. The first regulating member 131 may be formed of, for example, silicon. In this case, the portion of the light reflective member 11 facing the first regulating member 131 is formed of material having hardness higher than that of silicon.

According to such a configuration, it is possible to suppress damage to the light reflective member 11 caused by the abutment of the first regulating member 131 upon the light reflective member 11.

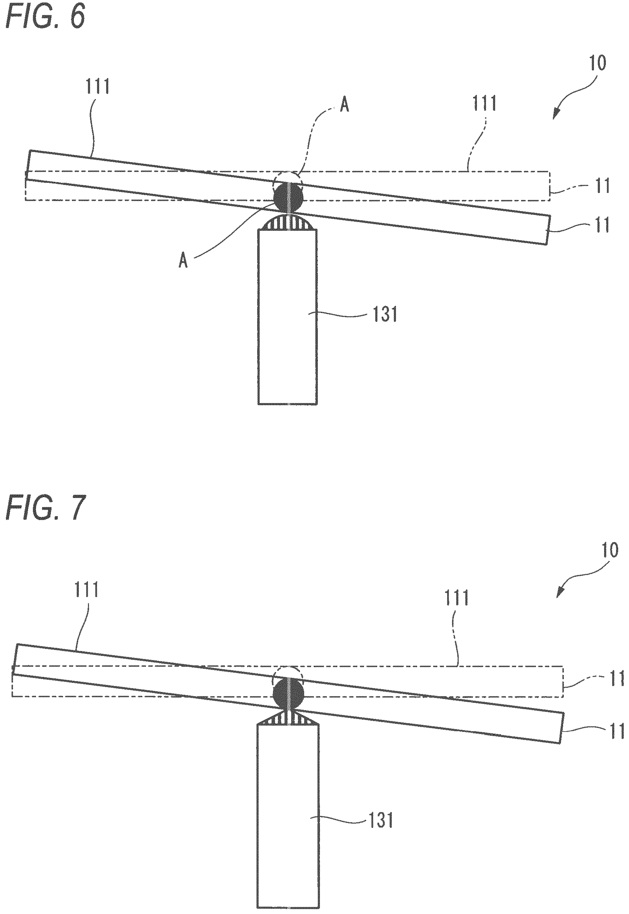

As illustrated in FIGS. 6 and 7, shape of a distal end of the first regulating member 131 may be appropriately changed. In either example, the shape is determined such that, when the first regulating member 131 abuts upon the light reflective member 11, they come into line abutment or point abutment with each other.

In the example illustrated in FIG. 6, the distal end of the first restriction member 131 has a semi-cylindrical shape having an axis extending in a direction along the oscillation axis A, or a shape having a plurality of hemispherical protrusions arranged in the direction along the oscillation axis A. In the example illustrated in FIG. 7, the distal end of the first regulating member 131 has a triangular prism shape having an axis extending in the direction along the oscillation axis A, or a shape having a plurality of triangular pyramid-shaped protrusions arranged in the direction along the oscillation axis A.

According to such a configuration, since the contact area between the light reflective member 11 and the first regulating member 131 can be reduced, it is possible to suppress the occurrence of electrostatic attraction between the light reflective member 11 and the first regulating member 131 when the regulation is performed. As a result, it is possible to suppress the occurrence of a situation that the oscillation of the light reflective member 11 is obstructed by the first regulating member 131.

As illustrated in FIG. 3, a geometric and fine uneven pattern may be formed on the surface of the first regulating member 131. In an exemplary uneven pattern P1, a plurality of linear grooves are arrayed. The width and depth of each groove may be on the order of several *µ* m, respectively. In an exemplary uneven pattern P2, a plurality of triangular pyramid-shaped protrusions are two-dimensionally arrayed. The width and the height of each protrusion may be on the order of several *µ* m, respectively.

Even with such a configuration, since the contact area between the light reflective member 11 and the first regulating member 131 can be reduced, it is possible to suppress the occurrence of electrostatic attraction between the light reflective member 11 and the first regulating member 131 when the regulation is performed.

It should be noted that each of the uneven pattern P1 and the uneven pattern P2 may be formed by an etching technique such as reactive ion etching or photo etching. In this case, the geometric and fine uneven pattern can be accurately formed with a relatively simple process. The material for forming the first regulating member 131 and the shape of the uneven pattern formed on the surface the first regulating member 131 are appropriately determined according to the etching technique to be adopted

As illustrated in FIG. 3, the light reflective device 10 may include a vibration applying device 14. The vibration applying device 14 is configured to apply ultrasonic vibration to at least one of the light reflective member 11 and the first regulating member 131 when electrostatic attraction occurs between the light reflective member 11 and the first regulating member 131. The frequency and the duration of the ultrasonic vibration to be applied are appropriately determined so as to be able to cancel the electrostatic attraction that may be generated between the light reflective member 11 and the first regulating member 131.

According to such a configuration, even in a case where the electrostatic attraction occurs between the light reflective member 11 and the first regulating member 131 unexpectedly, it is possible to recover a state that the two members face each other with the gap therebetween without applying excessive stress to the light reflective member 11.

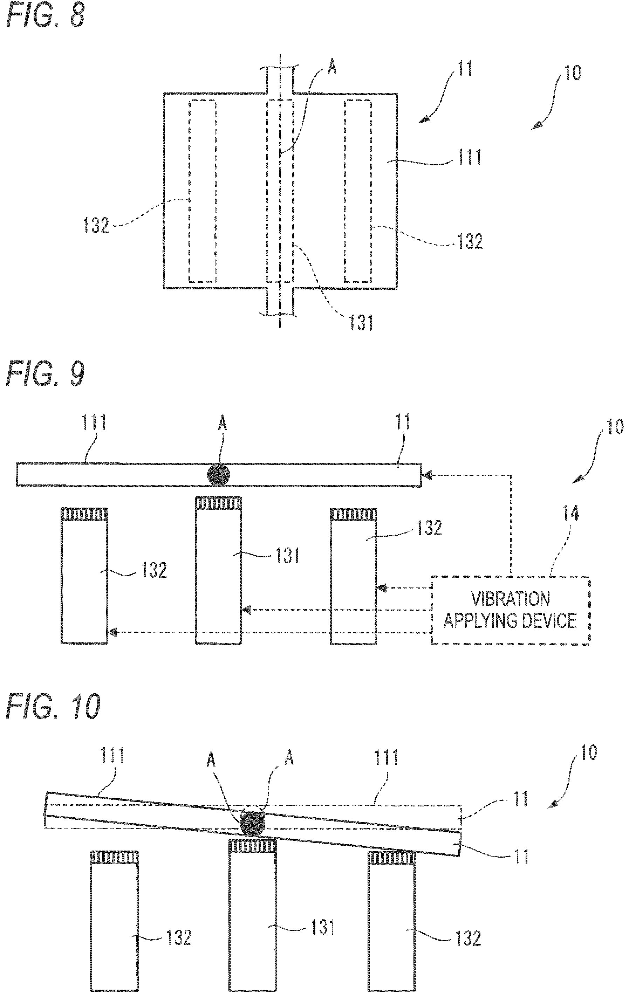

As illustrated in FIGS. 8 and 9, the light reflecting device 10 may include a pair of second regulating members 132. The second regulating members 132 are disposed so as to be axially symmetric with respect to the oscillation axis A. Each second regulating member 132 faces the light reflective member 11 with a gap therebetween in a direction intersecting with the mirror surface 111.

According to such a configuration, as illustrated in FIG. 10, when the oscillation axis A is displaced in the direction intersecting the mirror surface 111 along with the oscillation of the light reflective member 11, at least one of the second regulating members 132 abuts upon a portion of the light reflective member 11. As a result, it is possible to easily regulate the displacement of the light reflective member 11 in such a direction that follows the displacement of the oscillation axis A in the direction intersecting the mirror surface 111.

On the other hand, in a state that the oscillation axis A is at the prescribed position, since a gap is formed between the light reflective member 11 and each of the second regulating members 132, the oscillation of the light reflective member 11 is not obstructed by the second regulating member 132. In other words, the size of the gap is determined so that the amount of displacement of the light reflective member 11 in the direction intersecting the mirror surface 111 does not exceed an allowable range while allowing the prescribed oscillating action of the light reflective member 11.

In this example, hardness of material forming the second regulating member 132 is so determined as to be lower than hardness of material forming a portion of the light reflective member 11 facing the second regulating member 132. Each second regulating member 132 may be formed of, for example, silicon. In this case, the portion of the light reflective member 11 facing each second regulating member 132 is formed of material having hardness higher than that of silicon.

According to such a configuration, it is possible to suppress damage to the light reflective member 11 caused by the abutment of the second regulating members 132 upon the light reflective member 11.

The shape of a distal end of each second regulating member 132 may be appropriately changed, similarly to the shape of the distal end of the first regulating member 131 described with reference to FIGS. 6 and 7. In addition, on the surface of each second regulating member 132, a geometric and fine uneven pattern may be formed, similarly to the surface of the first regulating member 131 described with reference to FIG. 3.

In these cases, since the contact area between the light reflective member 11 and each second regulating member 132 can be reduced, it is possible to suppress the occurrence of electrostatic attraction between the light reflective member 11 and each second regulating member 132 when the regulation is performed. As a result, it is possible to suppress the occurrence of a situation that the oscillation of the light reflective member 11 is obstructed by each of the second regulating members 132.

The uneven pattern may be formed by an etching technique such as reactive ion etching or photo etching. In this case, the geometric and fine uneven pattern can be accurately formed with a relatively simple process. The material for forming each second regulating member 132 and the shape of the uneven pattern formed on the surface each second regulating member 132 are appropriately determined according to the etching technique to be adopted

As illustrated in FIG. 9, the vibration applying device 14 may be configured to apply ultrasonic vibration to at least one of the light reflective member 11 and the second regulating members 132 when electrostatic attraction occurs between the light reflective member 11 and any of the second regulating members 132. The frequency and the duration of the ultrasonic vibration to be applied are appropriately determined so as to be able to cancel the electrostatic attraction that may be generated between the light reflective member 11 and each second regulating member 132.

According to such a configuration, even in a case where the electrostatic attraction occurs between the light reflective member 11 and any of the second regulating member 132 unexpectedly, it is possible to recover a state that the two members face each other with the gap therebetween without applying excessive stress to the light reflective member 11.

The number and the position of the first regulating member 131 may be appropriately determined as long as it is disposed so as to face the portion of the light reflective member 11 including the oscillation axis A.

The number and the positions of the second regulating members 132 can be appropriately determined as long as they are arranged so as to be axially symmetric with respect to the oscillation axis A.

The first regulating member 131 may be omitted as long as it is possible to suppress a decrease in the accuracy of the direction of the light reflection performed by the light reflection device 10 by regulating the displacement of the light reflective member 11 in such a direction that follows the displacement of the oscillation axis A in the direction intersecting the mirror surface 111 with the pair of second regulating members 132.

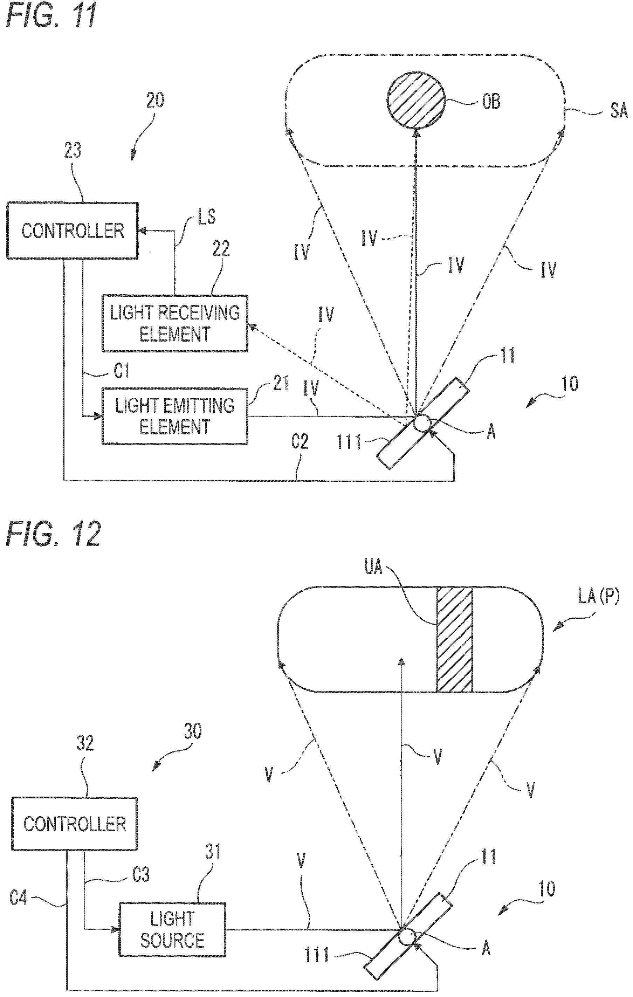

The light reflecting device 10 described above may be installed in a sensor device 20 illustrated in FIG. 11. The sensor device 20 is a device configured to detect an object OB situating in a prescribed sensing area SA.

The sensor device 20 includes a light emitting element 21. The light emitting element 21 is configured to emit non-visible light IV. The light emitting element 21 can be implemented by a light emitting diode, a laser diode, or the like.

The sensor device 20 includes a light receiving element 22. The light receiving element 22 is configured to have sensitivity to the wavelength of the non-visible light IV emitted by the light emitting element 21, and to output a light detecting signal LS corresponding to the intensity of the incident light. The light receiving element 22 can be implemented by a photodiode, a phototransistor, a photo resistor, or the like.

The sensor device 20 includes a controller 23. The controller 23 is configured to output an emission control signal C1 for causing the light emitting element 21 to emit the non-visible light IV, and a reflection control signal C2 for causing the light reflecting device 10 to adjust the posture of the light reflective member 11. The controller 23 is configured to receive the light detecting signal LS outputted from the light receiving element 22.

The controller 23 outputs the emission control signal C1 to cause the light emitting element 21 to emit pulsed non-visible light IV. The non-visible light IV emitted from the light emitting element 21 is incident on the light reflective member 11. An appropriate optical system may be disposed between the light emitting element 21 and the light reflective member 11. The non-visible light IV reflected by the mirror surface 111 of the light reflective member 11 travels toward a sensing area SA.

In a case where an object OB situates on the path of the non-visible light IV, it is reflected by the object OB and returns toward the light reflective member 11. The controller 23 outputs the reflection control signal C2 to cause the deflecting mechanism 12 of the light reflective device 10 to oscillate the light reflective member 11. The angle of reflection by the mirror surface 111 is thus changed. Specifically, the posture of the light reflective member 11 is adjusted so that the returned light from the object OB is reflected toward the light receiving element 22. An appropriate optical system may be disposed between the light reflective member 11 and the light receiving element 22.

The returned light from the object OB reflected by the mirror surface 111 is incident on the light receiving element 22. At the light receiving element 22, a pulse-shaped change in the light receiving intensity is detected. The light receiving element 22 outputs a light detecting signal LS corresponding to the change. By receiving the light detecting signal LS corresponding to the pulsed change of the light receiving intensity, the controller 23 can detect a fact that an object OB situates on the path of the non-visible light IV emitted from the light emitting element 21 and reflected by the light reflective member 11. In addition, the controller 23 can detect a distance to the object OB based on a time length from the time when the non-visible light IV is emitted by the light emitting element 21 to the time when the returned light is detected by the light receiving element 22.

The controller 23 repeats the above-described processing while changing the posture of the light reflective member 11 at a timing when the light emitting element 21 is caused to emit the non-visible light IV with the reflection control signal C2. As a result, the traveling direction of the non-visible light IV is changed within a range indicated by the chain lines in FIG. 11. The range corresponds to the sensing area SA. Accordingly, it is possible to realize a configuration for detecting an object OB by scanning the sensing area SA with the non-visible light IV emitted from the single light emitting element 21.

The controller 23 having the above functions may be implemented by an output interface that outputs the emission control signal C1 and the reflection control signal C2, an input interface that receives the light detecting signal LS, and a processor that executes processing in connection with the emission control signal C1, the reflection control signal C2, and the light detecting signal LS. The processor may be implemented by an exclusive integrated circuit such as a microcontroller, an ASIC, an FPGA, or the like. The processor may be implemented by a general-purpose microprocessor operating in cooperation with a general-purpose memory.

The light reflecting device 10 described above may be installed in a lighting device 30 illustrated in FIG. 12. The lighting device 30 is a device configured to light a prescribed lighting area LA with visible light V.

The lighting device 30 includes a light source 31. The light source 31 is configured to emit visible light V. The light source 31 can be implemented by a semiconductor light emitting element such as a light emitting diode, a laser diode, or an EL element.

The lighting device 30 includes a controller 32. The controller 32 is configured to output an emission control signal C3 for causing the light source 31 to emit visible light V, and a reflection control signal C4 for causing the light reflecting device 10 to adjust the posture of the light reflective member 11.

The controller 32 causes the light source 31 to emit the visible light V by outputting the emission control signal C3. The visible light V emitted from the light source 31 is incident on the light reflective member 11. An appropriate optical system may be disposed between the light source 31 and the light reflective member 11. The visible light V reflected by the mirror surface 111 of the light reflective member 11 travels toward the lighting area LA. The visible light V forms a part of a prescribed light distribution pattern P in the lighting area LA.

The controller 32 repeats the above-described processing while changing the posture of the light reflective member 11 at a timing when the light source 31 is caused to emit the visible light V with the reflection control signal C4. As a result, the traveling direction of the visible light V is changed within a range indicated by the chain lines in FIG. 12. The range corresponds to the lighting area LA. By repeating the scanning of the lighting area LA with the visible light V emitted from the single light source 31 at a frequency unrecognizable by the human eye, it appears that a light distribution pattern P having an area wider than the area that can be lighted with the visible light V emitted from the single light source 31 is continuously formed.

The controller 32 may change the combination of the emission control signal C3 and the reflection control signal C4 so as to stop the light emission of the visible light V from the light source 31 when the light reflective member 11 is in a posture capable of reflecting the visible light V in a specific direction in the lighting area LA. In this case, as illustrated in FIG. 12, it is possible to form a light distribution pattern P including a partial non-lighting area UA in the lighting area LA.

The controller 32 having the above functions may be implemented by an output interface that outputs the emission control signal C3 and the reflection control signal C4, and a processor that executes processing in connection with the emission control signal C3 and the reflection control signal C4. The processor may be implemented by an exclusive integrated circuit such as a microcontroller, an ASIC, an FPGA, or the like. The processor may be implemented by a general-purpose microprocessor operating in cooperation with a general-purpose memory.

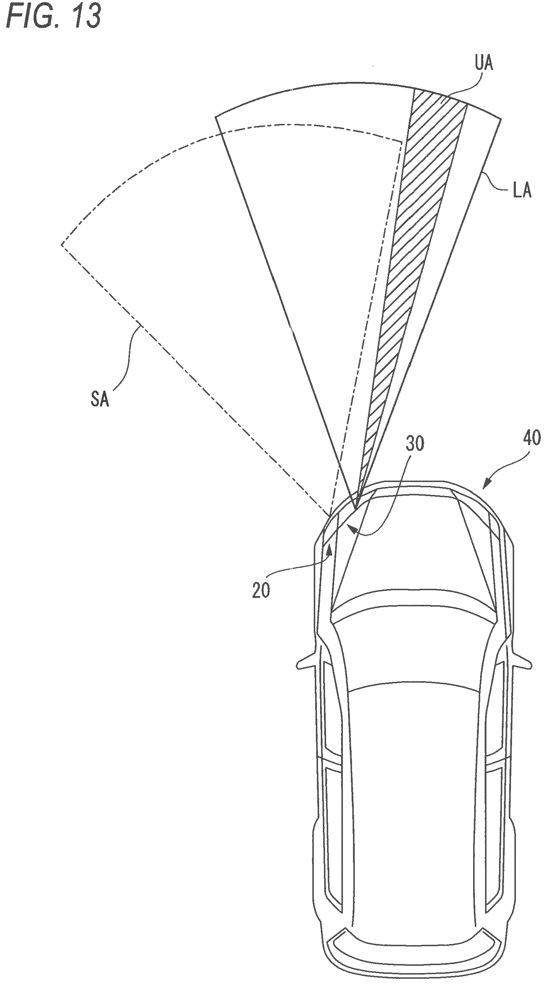

As illustrated in FIG. 13, at least one of the sensor device 20 and the lighting device 30 may be installed in a vehicle 40. The vehicle 40 is an example of a mobile entity. In this example, at least one of the sensor device 20 and the lighting device 30 is installed in a left front portion of the vehicle 40. The left front portion of the vehicle 40 is a portion located on the left of a center in a left-right direction of the vehicle 40 and ahead of a center in a front-rear direction of the vehicle 40. The sensing area SA of the sensor device 20 and the lighting area LA of the lighting device 30 are defined outside the vehicle 40. The above-described non-lighting area UA is formed to suppress glare that may be imparted to an occupant of another vehicle or a pedestrian situating in the lighting area LA.

In a case where both the sensor device 20 and the lighting device 30 are installed in the vehicle 40, the light reflective member 11 of the single light reflecting device 10 may be shared by the light emitting element 21 and the light receiving element 22 of the sensor device 20, as well as the light source 31 of the lighting device 30.

In a mobile entity such as the vehicle 40, in accordance with acceleration and deceleration or vibration, displacement of the oscillation axis A of the light reflective member 11 in the direction intersecting the mirror surface 111 is likely to be occurred. Accordingly, the various advantages described above are more remarkable.

The above embodiments are merely illustrative to facilitate understanding of the presently disclosed subject matter. The configuration according to each of the above embodiments can be appropriately modified or combined with another embodiment within the gist of the presently disclosed subject matter.

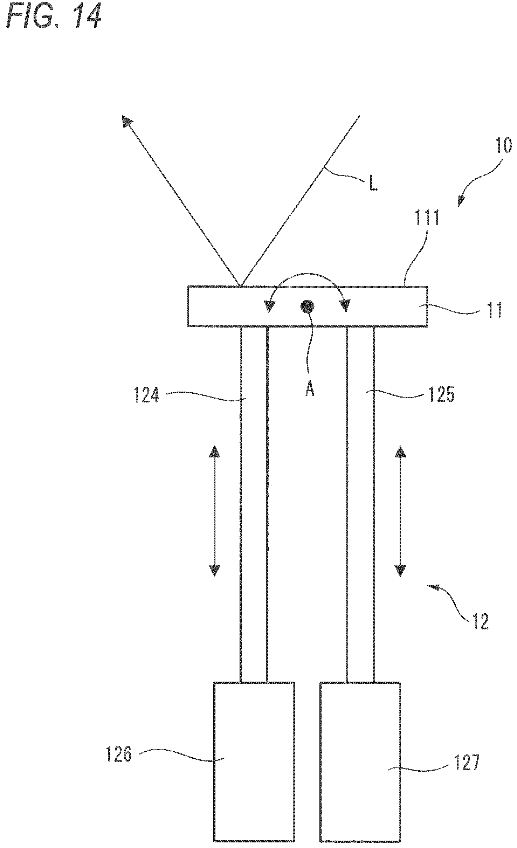

The configuration of the deflecting mechanism 12 can be appropriately determined as long as the light reflective member 11 can be oscillated about the oscillation axis A extending in the direction along the mirror surface 111 of the light reflective member 11. For example, as illustrated in FIG. 14, the deflecting mechanism 12 may include a first arm member 124, a second arm member 125, a first actuator 126, and a second actuator 127.

Each of the first arm member 124 and the second arm member 125 extends so that a longitudinal direction thereof extends in the direction intersecting the mirror surface 111 of the light reflective member 11. Each of one longitudinal end portion of the first arm member 124 and one longitudinal end portion of the second arm member 125 is coupled to the light reflective member 11.

The first actuator 126 supports the first arm member 124. The first actuator 126 displaces the first arm member 124 in the direction intersecting the mirror surface 111 of the light reflective member 11. The second actuator 127 supports the second arm member 125. The second actuator 127 displaces the second arm member 125 in the direction intersecting the mirror surface 111 of the light reflective member 11. For example, each of the first actuator 126 and the second actuator 127 may be configured to include a piezoelectric element that expands and contracts along that direction in accordance with an applied voltage.

By appropriately setting each of the displacement amount of the first arm member 124 caused by the first actuator 126 and the displacement amount of the second arm member 125 caused by the second actuator 127, the traveling direction of the light L reflected by the light reflective member 11 can be adjusted.

In addition to or instead of the example illustrated in FIG. 13, the position at which at least one of the sensor device 20 and the lighting device 30 is disposed in the vehicle 40 may be appropriately determined in accordance with at least one of the sensing area SA and the lighting area LA as prescribed.

The mobile entity in which at least one of the sensor device 20 and the lighting device 30 is installed is not limited to the vehicle 40. Examples of other mobile entities include railways, flying objects, aircrafts, and ships. The mobile entity in which at least one of the sensor device 20 and the lighting device 30 is installed may not require a driver.

At least one of the sensor device 20 and the lighting device 30 need not be installed in a mobile entity. For example, the sensor device 20 is also applicable to a security system installed in a house or a facility for detecting an object that has entered a sensing area. The lighting device 30 is also applicable to a device for temporarily displaying a prescribed figure, character, marker, or the like on a specific road surface or a wall surface.

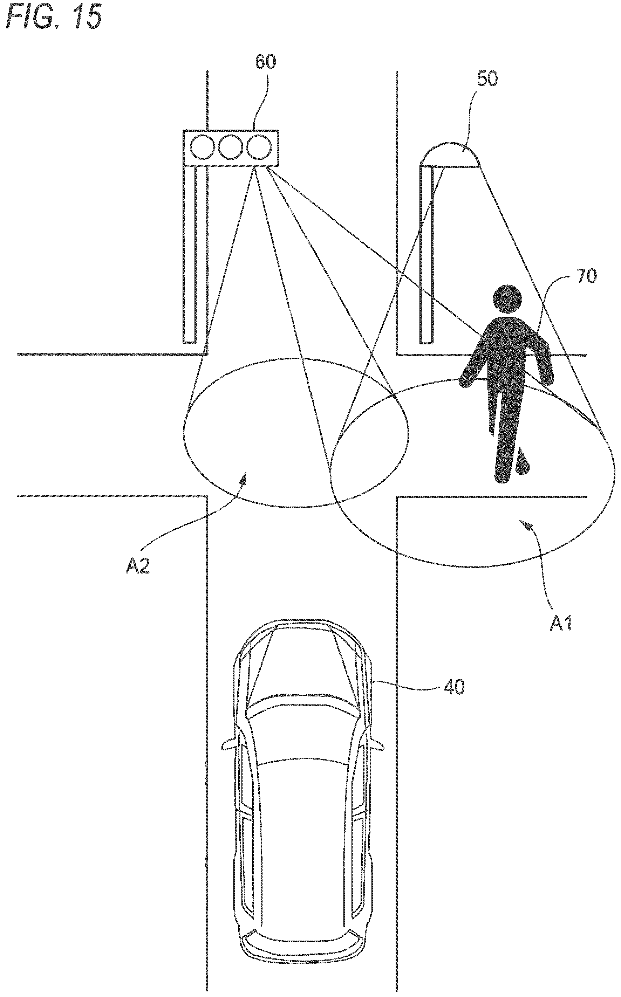

For example, as illustrated in FIG. 15, at least one of the sensor device 20 and the lighting device 30 may be installed in a traffic infrastructure facility such as a street lamp 50 or a traffic light 60.

In a case where the sensor device 20 is installed in the street lamp 50 or the traffic light 60, a walker 70, a vehicle, or the like situating in an area A1 can be detected. In other words, the sensing area SA illustrated in FIG. 11 is defined in the area A1. For example, when it is detected that the walker 70 or the vehicle is about to enter an intersection, the information can be notified, via communication, to the vehicle 40 that is about to enter the intersection from another direction. Alternatively, the lighting device 30 may draw, in an area A2, information (a character, a marker, a blinking alert color, etc.) prompting attention to the vehicle 40 that is about to enter the intersection from another direction. In other words, the lighting area LA illustrated in FIG. 12 is defined in the area A2.

The present application is based on Japanese Patent Application No. 2021-043885 filed on March 17, 2021.

## Claims

1. A light reflecting device (10), comprising:
a light reflective member (11) having a mirror surface (111) adapted to reflect light;
a deflecting mechanism (12) configured to oscillate the light reflective member about an oscillation axis (A) extending in a direction along the mirror surface; and
a first regulating member (131) facing a portion of the light reflective member including the oscillation axis with a gap therebetween in a direction intersecting with the mirror surface, and configured to regulate displacement of the oscillation axis in the direction intersecting with the mirror surface;
**characterized in that** hardness of material forming the first regulating member (131) is lower than hardness of material forming a portion of the light reflective member (11) facing the first regulating member.

2. The light reflecting device according to claim 1,
wherein a geometric uneven pattern is formed on the first regulating member (131).

3. The light reflecting device according to claim 2,
wherein the uneven pattern is formed with an etching technique.

4. The light reflecting device according to any one of claims 1 to 3, further comprising:
a vibration applying device (14) configured to apply ultrasonic vibrations to at least one of the light reflective member (11) and the first regulating member (131).

5. The light reflecting device according to any one of claims 1 to 3, further comprising:
a pair of second regulating members (132) arranged so as to be axially symmetric with respect to the oscillation axis (A), facing the light reflective member (11) with a gap therebetween in the direction intersecting with the mirror surface (111), and configured to regulate displacement of the light reflective member in the direction intersecting with the mirror surface.

6. The light reflecting device according to claim 5,
wherein hardness of material forming the second regulating members (132) is lower than hardness of material forming a portion of the light reflective member (11) facing the second regulating members.

7. The light reflecting device according to claim 5 or 6,
wherein a geometric uneven pattern is formed on each of the second regulating members (132).

8. The light reflecting device according to claim 7,
wherein the uneven pattern is formed with an etching technique.

9. The light reflecting device according to any one of claims 5 to 8, further comprising:
a vibration applying device (14) configured to apply ultrasonic vibrations to at least one of the light reflective member (131) and the second regulating members (132).

10. A light reflecting device, comprising:
a light reflective member (11) having a mirror surface (111) adapted to reflect light;
a deflecting mechanism (12) configured to oscillate the light reflective member about an oscillation axis (A) extending in a direction along the mirror surface; and
a pair of regulating members (132) arranged so as to be axially symmetric with respect to the oscillation axis, facing the light reflective member (11) with a gap therebetween in a direction intersecting with the mirror surface, and configured to regulate displacement of the light reflective member in the direction intersecting with the mirror surface,
**characterized in that** hardness of material forming the pair of regulating members (132) is lower than hardness of material forming a portion of the light reflective member (11) facing the pair of regulating members (132).

11. A sensor device (20), comprising:
the light reflecting device (10) according to any one of claims 1 to 10;
a light emitting element (21) configured to emit invisible light; and
a light receiving element (22) configured to output a light detecting signal that corresponds to an incident intensity of invisible light,
wherein the mirror surface (111) of the light reflecting device (10) is arranged to reflect the invisible light emitted from the light emitting element (21) toward a sensing area (SA), and to reflect invisible light reflected by an object situating in the sensing area toward the light receiving element (22).

12. The sensor device according to claim 11,
wherein the sensor device (20) is configured to be installed in a mobile entity.

13. A lighting device (30), comprising:
the light reflecting device (10) according to any one of claims 1 to 10; and
a light source (31) configured to emit visible light,
wherein the mirror surface (111) of the light reflecting device is arranged to reflect the visible light toward a lighting area (LA).

14. The lighting device according to claim 13, further comprising:
a light emitting element (21) configured to emit invisible light; and
a light receiving element (22) configured to output a light detecting signal that corresponds to an incident intensity of invisible light,
wherein the mirror surface (111) of the light reflecting device (10) is arranged to reflect the invisible light emitted from the light emitting element toward a sensing area (SA), and to reflect invisible light reflected by an object situating in the sensing area toward the light receiving element.

15. The lighting device according to claim 13 or 14,
wherein the lighting device (30) is configured to be installed in a mobile entity.

## Patentansprüche

1. Lichtreflektierende Vorrichtung (10), umfassend:
ein lichtreflektierendes Element (11), das eine Spiegelfläche (111) aufweist, die angepasst ist, um Licht zu reflektieren;
einen Ablenkmechanismus (12), der konfiguriert ist, um das lichtreflektierende Element um eine Schwingungsachse (A) zu schwingen, die sich in einer Richtung entlang der Spiegeloberfläche erstreckt; und
ein erstes Regulierungselement (131), das einem Abschnitt des dichten reflektierenden Elements, der die Schwingungsachse beinhaltet, mit einem Spalt dazwischen in einer Richtung zugewandt ist, die sich mit der Spiegeloberfläche schneidet, und das konfiguriert ist, um eine Verschiebung der Schwingungsachse in der Richtung zu regulieren, die sich mit der Spiegelfläche schneidet;
**dadurch gekennzeichnet, dass** eine Härte von Material, das das erste Regulierungselement (131) bildet, geringer ist als eine Härte von Material, das einen Abschnitt des lichtreflektierenden Elements (11) bildet, das dem ersten Regulierungselement zugewandt ist.

2. Lichtreflektierende Vorrichtung nach Anspruch 1,
wobei auf dem ersten Regulierungselement (131) ein geometrisch ungleichmäßiges Muster gebildet ist.

3. Lichtreflektierende Vorrichtung nach Anspruch 2,
wobei das ungleichmäßige Muster mit einer Ätztechnik erzeugt wird.

4. Lichtreflektierende Vorrichtung nach einem der Ansprüche 1 bis 3, ferner umfassend:
eine Vibrationsanwendungsvorrichtung (14), die konfiguriert ist, um Ultraschallschwingungen auf mindestens eines der lichtreflektierenden Elemente (11) und/oder das erste Regulierungselement (131) anzuwenden.

5. Lichtreflektierende Vorrichtung nach einem der Ansprüche 1 bis 3, ferner umfassend: ein Paar von zweiten Regulierungselementen (132), die angeordnet sind, um in Bezug auf die Schwingungsachse (A) axial symmetrisch zu sein, dem lichtreflektierenden Element (11) mit einem Spalt dazwischen in der Richtung, die die Spiegelfläche (111) schneidet, zugewandt zu sein und konfiguriert sind, um eine Verschiebung des lichtreflektierenden Elements in der Richtung, die die Spiegelfläche schneidet, zu regulieren.

6. Lichtreflektierende Vorrichtung nach Anspruch 5,
wobei eine Härte von Material, das die zweiten Regulierungselemente (132) bildet, geringer ist als eine Härte des Materials, das einen Abschnitt des lichtreflektierenden Elements (11) bildet, das den zweiten Regulierungselementen zugewandt ist.

7. Lichtreflektierende Vorrichtung nach Anspruch 5 oder 6,
wobei auf jedem der zweiten Regulierungselemente (132) ein geometrisch ungleichmäßiges Muster gebildet ist.

8. Lichtreflektierende Vorrichtung nach Anspruch 7,
wobei das ungleichmäßige Muster durch eine Ätztechnik gebildet wird.

9. Lichtreflektierende Vorrichtung nach einem der Ansprüche 5 bis 8, ferner umfassend:
eine Vibrationsanwendungsvorrichtung (14), die konfiguriert ist, um Ultraschallschwingungen auf mindestens eines der lichtreflektierenden Elemente (131) und/oder das erste Regulierungselement (132) anzuwenden.

10. Lichtreflektierende Vorrichtung, umfassend:
ein lichtreflektierendes Element (11), das eine Spiegelfläche (111) aufweist, die angepasst ist, um Licht zu reflektieren;
einen Ablenkmechanismus (12), der konfiguriert ist, um das lichtreflektierende Element um eine Schwingungsachse (A) zu schwingen, die sich in einer Richtung entlang der Spiegeloberfläche erstreckt; und
ein Paar von Regulierungselementen (132), die angeordnet sind, um in Bezug auf die Schwingungsachse axial symmetrisch zu sein, dem lichtreflektierenden Element (11) mit einem Spalt dazwischen in einer Richtung, die die Spiegelfläche schneidet, zugewandt zu sein und konfiguriert sind, um eine Verschiebung des lichtreflektierenden Elements in der Richtung, die die Spiegelfläche schneidet, zu regulieren,
**dadurch gekennzeichnet, dass** eine Härte von Material, das das Paar von Regulierungselementen (132) bildet, geringer ist als eine Härte von Materials, das einen Abschnitt des lichtreflektierenden Elements (11) bildet, das dem Paar von Regulierungselementen (132) zugewandt ist.

11. Sensorvorrichtung (20), umfassend:
die lichtreflektierende Vorrichtung (10) nach einem der Ansprüche 1 bis 10;
ein lichtemittierendes Element (21), das konfiguriert ist, um unsichtbares Licht zu emittieren; und
ein Lichtempfangselement (22), das konfiguriert ist, um ein Lichterfassungssignal auszugeben, das einer einfallenden Intensität von unsichtbarem Licht entspricht,
wobei die Spiegelfläche (111) der lichtreflektierenden Vorrichtung (10) angeordnet ist, um das von dem lichtemittierenden Element (21) emittierte unsichtbare Licht zu einem Erfassungsbereich (SA) zu reflektieren und unsichtbares Licht, das von einem in dem Erfassungsbereich befindlichen Objekt reflektiert wird, zu dem Lichtempfangselement (22) zu reflektieren.

12. Sensorvorrichtung nach Anspruch 11,
wobei die Sensorvorrichtung (20) konfiguriert ist, um in einer mobilen Einheit installiert zu werden.

13. Beleuchtungsvorrichtung (30), umfassend:
die lichtreflektierende Vorrichtung (10) nach einem der Ansprüche 1 bis 10; und eine Lichtquelle (31), die konfiguriert ist, um sichtbares Licht zu emittieren,
wobei die Spiegelfläche (111) der lichtreflektierenden Vorrichtung angeordnet ist, um das sichtbare Licht in Richtung eines Beleuchtungsbereichs (LA) zu reflektieren.

14. Beleuchtungsvorrichtung nach Anspruch 13, ferner umfassend:
ein lichtemittierendes Element (21), das konfiguriert ist, um unsichtbares Licht zu emittieren; und
ein Lichtempfangselement (22), das konfiguriert ist, um ein Lichterfassungssignal auszugeben, das einer einfallenden Intensität von unsichtbarem Licht entspricht,
wobei die Spiegelfläche (111) der lichtreflektierenden Vorrichtung (10) angeordnet ist, um das von dem lichtemittierenden Element emittierte unsichtbare Licht zu einem Erfassungsbereich (SA) zu reflektieren und unsichtbares Licht, das von einem in dem Erfassungsbereich befindlichen Objekt reflektiert wird, zu dem Lichtempfangselement zu reflektieren.

15. Beleuchtungsvorrichtung nach Anspruch 13 oder 14,
wobei die Beleuchtungsvorrichtung (30) konfiguriert ist, um in einer mobilen Einheit installiert zu werden.

## Revendications

1. Dispositif de réflexion de lumière (10), comprenant :
un élément qui réfléchit la lumière (11) ayant une surface miroir (111) adaptée pour réfléchir la lumière ;
un mécanisme de déviation (12) configuré pour faire osciller l'élément qui réfléchit la lumière autour d'un axe d'oscillation (A) qui s'étend dans une direction le long de la surface miroir ; et
un premier élément de régulation (131) qui fait face à une partie de l'élément qui réfléchit la lumière comportant l'axe d'oscillation avec un espace entre eux dans une direction qui croise la surface miroir, et configuré pour réguler le déplacement de l'axe d'oscillation dans la direction qui croise la surface miroir ;
**caractérisé en ce que** la dureté du matériau qui forme le premier élément de régulation (131) est inférieure à la dureté du matériau qui forme une partie de l'élément qui réfléchit la lumière (11) qui fait face au premier élément de régulation.

2. Dispositif de réflexion de lumière selon la revendication 1,
dans lequel un motif géométrique irrégulier est formé sur le premier élément de régulation (131).

3. Dispositif de réflexion de lumière selon la revendication 2,
dans lequel le motif irrégulier est formé avec une technique de gravure.

4. Dispositif de réflexion de lumière selon l'une quelconque des revendications 1 à 3, comprenant en outre :
un dispositif d'application de vibrations (14) configuré pour appliquer des vibrations ultrasonores à au moins l'un de l'élément qui réfléchit la lumière (11) et du premier élément de régulation (131).

5. Dispositif de réflexion de lumière selon l'une quelconque des revendications 1 à 3, comprenant en outre :
une paire de deuxièmes éléments de régulation (132) prévus de façon à être axialement symétriques par rapport à l'axe d'oscillation (A), qui font face à l'élément qui réfléchit la lumière (11) avec un espace entre eux dans la direction qui croise la surface miroir (111), et configurés pour réguler le déplacement de l'élément qui réfléchit la lumière dans la direction qui croise la surface miroir.

6. Dispositif de réflexion de lumière selon la revendication 5,
dans lequel la dureté du matériau qui forme les deuxièmes éléments de régulation (132) est inférieure à la dureté du matériau qui forme une partie de l'élément qui réfléchit la lumière (11) qui fait face aux deuxièmes éléments de régulation.

7. Dispositif de réflexion de lumière selon la revendication 5 ou 6,
dans lequel un motif géométrique irrégulier est formé sur chacun des deuxièmes éléments de régulation (132).

8. Dispositif de réflexion de lumière selon la revendication 7,
dans lequel le motif irrégulier est formé avec une technique de gravure.

9. Dispositif de réflexion de lumière selon l'une quelconque des revendications 5 à 8, comprenant en outre :
un dispositif d'application de vibrations (14) configuré pour appliquer des vibrations ultrasonores à au moins l'un de l'élément qui réfléchit la lumière (131) et des deuxièmes éléments de régulation (132).

10. Dispositif de réflexion de lumière, comprenant :
un élément qui réfléchit la lumière (11) ayant une surface miroir (111) adaptée pour réfléchir la lumière ;
un mécanisme de déviation (12) configuré pour faire osciller l'élément qui réfléchit la lumière autour d'un axe d'oscillation (A) qui s'étend dans une direction le long de la surface miroir ; et
une paire d'éléments de régulation (132) prévus de façon à être axialement symétriques par rapport à l'axe d'oscillation, qui font face à l'élément qui réfléchit la lumière (11) avec un espace entre eux dans une direction qui croise la surface miroir, et configurés pour réguler le déplacement de l'élément qui réfléchit la lumière dans la direction qui croise la surface miroir,
**caractérisé en ce que** la dureté du matériau qui forme la paire d'éléments de régulation (132) est inférieure à la dureté du matériau qui forme une partie de l'élément qui réfléchit la lumière (11) qui fait face à la paire d'éléments de régulation (132).

11. Dispositif de capteur (20), comprenant :
le dispositif de réflexion de lumière (10) selon l'une quelconque des revendications 1 à 10 ;
un élément d'émission de lumière (21) configuré pour émettre une lumière invisible ; et
un élément de réception de lumière (22) configuré pour délivrer un signal de détection de lumière qui correspond à une intensité incidente de la lumière invisible,
dans lequel la surface miroir (111) du dispositif de réflexion de lumière (10) est prévue pour réfléchir la lumière invisible émise par l'élément d'émission de lumière (21) vers une zone de détection (SA), et pour réfléchir la lumière invisible réfléchie par un objet qui se trouve dans la zone de détection vers l'élément de réception de lumière (22).

12. Dispositif de capteur selon la revendication 11,
dans lequel le dispositif de capteur (20) est configuré pour être installé dans une entité mobile.

13. Dispositif d'éclairage (30), comprenant :
le dispositif de réflexion de lumière (10) selon l'une quelconque des revendications 1 à 10 ; et
une source de lumière (31) configurée pour émettre une lumière visible,
dans lequel la surface miroir (111) du dispositif de réflexion de lumière est prévue pour réfléchir la lumière visible vers une zone d'éclairage (LA).

14. Dispositif d'éclairage selon la revendication 13, comprenant en outre :
un élément d'émission de lumière (21) configuré pour émettre une lumière invisible ; et
un élément de réception de lumière (22) configuré pour délivrer un signal de détection de lumière qui correspond à une intensité incidente de la lumière invisible,
dans lequel la surface miroir (111) du dispositif de réflexion de lumière (10) est prévue pour réfléchir la lumière invisible émise par l'élément d'émission de lumière vers une zone de détection (SA), et pour réfléchir la lumière invisible réfléchie par un objet qui se trouve dans la zone de détection vers l'élément de réception de lumière.

15. Dispositif d'éclairage selon la revendication 13 ou 14,
dans lequel le dispositif d'éclairage (30) est configuré pour être installé dans une entité mobile.
